# EUROPEAN PATENT SPECIFICATION

(11) **EP 3 458 710 B1**
(45) Date of publication and mention of the grant of the patent: **15.12.2021**
(21) Application number: 17725164.2
(22) Date of filing: 16.05.2017
(51) Int. Cl.: F03D 1/06, F03D 80/50

(54) **LEADING EDGE PROTECTION OF A WIND TURBINE BLADE**
VORDERKANTENSCHUTZ FÜR EIN WINDTURBINENROTORBLATT
PROTECTION DE BORD D'ATTAQUE D'UNE PALE D'ÉOLIENNE

(30) Priority: 18.05.2016 DK 201670330
(43) Date of publication of application: 27.03.2019
(73) Proprietor: Vestas Offshore Wind A/S, 8200 Aarhus N. (DK)
(72) Inventor: RUIJTER, Wout, 8600 Silkeborg (DK); MELDGAARD, Christian, 8410 Rønde (DK); DAMGAARD, Brian Bækdahl, 8362 Hørning (DK)
(74) Representative: Vestas Patents Department
(86) International application number: PCT/DK2017/050153
(87) International publication number: WO 2017/198267

(56) References cited:
- WO-A1-2008/157013
- WO-A1-2016/206702
- US-A1- 2010 135 820
- US-A1- 2013 012 086
- US-A1- 2016 046 088

## Description

### FIELD OF THE INVENTION

The present invention relates to a method of preparing a wind turbine blade with a leading edge protection.

### BACKGROUND OF THE INVENTION

Modern wind turbines continue to grow in size and be equipped with increasingly long wind turbine blades in order to increase the power production. As the blades get longer, the velocities of the particles impacting on the blade surface are correspondingly increased. Rain, hail, salt spray and other debris particles impact the blade surface at up to 400 km/h or even more potentially causing significant erosion damage. Especially the leading edge of the wind turbine and in particular the outermost part of the wind turbine blade closest to the tip is exposed to erosion. If the wind turbine blades are not sufficiently protected or if the protection is worn away, the blades are over time seen to suffer pitting, gouging and delamination, which affects the aerodynamic efficiency significantly and can even have an impact on the structural integrity of the entire blade. Poor blade performance may reduce annual energy production, and repair downtime is costly.

Leading edge protection can be obtained by mounting a pre-manufactured protection cover or shield on the outer surface of the finished wind turbine as described in e.g. EP2416950, WO 2008/157013, or WO 2013/092211. However, a pre-manufactured cover is difficult to manufacture such as to closely fit the 3-dimensional blade geometry along a length of the leading edge which is necessary to obtain a strong bond to the blade and to obtain a resulting leading edge with a well-controlled geometry and with a smooth transition from the cover to the blade shell. Furthermore, pre-manufactured leading edge covers are difficult if not impossible to handle and manage during repair of a damaged wind turbine blade still attached to the wind turbine hub.

It is also known to apply surface films or tapes to the leading edge area for increased erosion protection. These are likewise difficult to apply on site for increased protection or repair of a wind turbine blade as mounted. Further, erosion tapes have been seen to rupture with partly loose tape portions left to freely flutter in the wind. This decreases the aerodynamic performance of the blade and may form a significant source of noise.

Different coatings are also specially designed and marketed to provide improved erosion resistance, such as 3M Wind Blade Protection Coating W4600 and W4601, ReNEW W-Series, HC05XP1 by Hontek, or a RELEST Wind coat by BASF. In general, the thicker the coating layer, the longer the blade can withstand the erosion. However, coatings can only be applied in thin coats to prevent runners. Further, there are issues with air inclusions, moist inclusion when painting in the field etc. The desired coating layer thickness can then be built up by the application of multiple thinner layers, which is labour intensive and time consuming. The interfaces between the layers of coatings have further been seen to weaken the strength and erosion resistance of the overall coat compared to a single layer coat of the same thickness.

WO2008/157013 describes a coating relating to erosion resistance on blades. US2010/0135820 describes a repair method for a wind turbine blade spar cap laminate.

### OBJECT OF THE INVENTION

It is an object of embodiments of the present invention to overcome or at least reduce some or all of the above described disadvantages by providing a method of preparing a wind turbine blade yielding improved leading edge protection against erosion and wear.

It is an object of embodiments of the invention to provide a method of preparing a wind turbine blade applicable to both the manufacturing process of the wind turbine blade as well as for repair or maintenance and in particular for on-site operations.

A further object of embodiments of the invention is to provide a simple yet effective method for improving the erosion resistance which can be performed in a limited number of process steps and with only simple and limited need for special equipment and tools.

So, in a first aspect the present invention relates to a method of preparing a wind turbine blade with a leading edge protection. The wind turbine blade extends a length between a root end and a tip end of the blade, and a width between a trailing edge and a leading edge, and the wind turbine blade comprises an outer surface portion comprising at least a part of the leading edge. The method according to the first aspect of the invention comprises:
- applying a first layer of paint on the surface portion of the blade,
- applying a layer of a fibrous material on top of the first layer of paint,
- applying a second layer of paint on the layer of fibrous material,
and allowing the applied leading edge protection to cure.

Hereby is obtained an improved protection of the leading edge of the wind turbine blade which is generally the part of the blade exposed to the highest loading by impacting particles or projectiles such as rain, hail, or dust. Through the application of a layer of fibrous material on top of the first layer of paint and with a second layer of paint is obtained a leading edge protection of considerably higher thickness than otherwise obtainable by the application of a coating or paint alone where only a limited thickness can be obtained before the paint will start to run or drip. This is advantageous in that the thicker layer of paint provides a correspondingly improved erosion resistance and protection against wear and impacting particles. Here, the layer of fibrous material is seen to act as a bonding agent, allowing a thicker layer of wet paint to exist in a stable manner without running or dripping. The layer of fibrous material in this way aids in building up a thick leading edge protection coat which when manufactured can be seen as a single layer coat.

Because of this bonding effect of the fibrous layer, the hereby obtained leading edge protection is furthermore seen to be stronger and to yield a considerably higher erosion resistance than a protection layer of the same overall thickness but built up by the application of a number of layers of paint alone and without any fibrous binding agent. Furthermore, the method according to the invention is advantageous in being far less time consuming and labour intensive in that the layers of material can be applied in a semi continuous manner without time needed for each paint layer to cure separately.

The experimentally observed increased erosion performance is believed to be caused by the more homogeneous thickness that can be applied and reduced number of layer interfaces, leading to an absence of weak spots from which erosion damage can grow.

Further, the fibrous layer embedded in the paint layer can be advantageous if the leading edge protection coat spans over surface cracks that are either present in the original substrate or introduced by external impacts (i.e. large hail stones), in this case the fibrous material could give the coat crack stopping abilities that are superior to that of a "plain" coating.

Further, the fibres in the fibrous layer increase the impact strength of the protected portion of the wind turbine blade yielding an improved ability to absorb shock and impact energy without breaking. The leading edge protection hereby reduces the risk of damage of the blade from impacting rain, hail, dirt particles, and the like.

In addition to the mentioned advantage of being a way to obtain the desired increased thickness of paint without the otherwise inherent problems of running paint, the proposed method according to the invention is advantageous in that it can be performed by simple hand operations and requires only basic tools. This enables the method to be performed on an existing wind turbine blade optionally while mounted, for example from a platform or using rope-access. Additionally, the method can be performed in the open with for example no need for special vacuum generating equipment, positioning jigs, lay-up machines or the like.

The protection method is further advantageous in that the fibrous layer can be comprised of a material that is simple to drape and lay out even on double curved surfaces. Hereby the leading edge protection can be applied with only minimal modifications to the overall outer shape of the wind turbine blade profile and without measurably affecting the aerodynamic properties of the blade.

Further, the leading edge protection can be established relatively fast which is especially advantageous when to be applied as repair or maintenance operation on site and especially for blades on offshore turbines where the working conditions can be acceptable for only short periods of time.

One or more of the layers of paint may be a coating, a lacquer, or any type of a covering applied to the surface of the wind turbine blade.

The outer surface portion typically extends across the leading edge such as to comprise a part of both the suction side surface and the pressure side surface of the blade. The outer surface portion may extend a similar distance to both sides of the leading edge, or extend a larger distance onto the pressure side than onto suction side, or vice versa. The outer surface portion may be of equal or similar cross sectional width along the length of the blade or may have a varying width such as for example covering a larger part of the wind turbine blade profile closer to the tip end of the blade. Hereby, the leading edge protection covers a larger part of the blade profile towards the tip end where the velocities of the impacting particles and projectiles are larger.

Because the blade tip and the outermost part of the wind turbine blade are exposed to particles of higher velocities and thereby have a higher risk of erosion damage, the leading edge protection is preferably applied to protect the outermost part of the blade leading edge next to or including the blade tip, such as for example to the outermost 5-40% of the length of the leading edge such as the outermost 10-20%.

The second layer of paint is applied to at least partially impregnate the layer of fibrous material.

According to the invention, the layer of fibrous material is partly or fully impregnated by the paint of the second layer. The partial or full impregnation may be realized by the application of the second layer of paint for example by rolling or brushing or spraying. By the partial or full impregnation of the fibrous layer, the two paint layers effectively form a single layer of leading edge protection with a fibrous material embedded within it. The strength of this layer can be higher than that of a stack of layers of the same thickness due to the elimination of inter-layer interfaces in combination with the fibrous material acting as a bonding agent.

According to an embodiment of the invention, the layer of fibrous material comprises a dry fibrous material. By a dry layer is to be understood a non-impregnated or essentially non-impregnated layer, possibly with a binding agent or sizing applied. Hereby the paint of the neighbouring layers can better impregnate the fibrous layer and the fibrous layer in turn better act to bond the layers of paint.

In an embodiment, the layer of fibrous material comprises a weave or a random fibre mat. This is advantageous in yielding a layer of some structural integrity which can easily be applied or laid up for example by simple hand operations and without the need for special tools or machinery. Further, weaves or random fibre mats can be configured to show good drapability properties and can fairly simply be cut into appropriate sizes according to the specific need. Also, weaves or random mats in general are adequate and well suited for impregnation by the application of paint.

In yet a further embodiment, the fibrous material comprises fibres of at least one material belonging to the group of glass fibre, carbon fibre, polyester, aramid, and nylon. These materials all have different strength, stiffness and surface properties allowing the designer to tune the leading edge protection characteristics depending on the coating and/or substrate materials at hand as well as the dominant failure criteria.

In an embodiment, the first and second layers of paint are of the same material. Hereby is ensured a complete compatibility between the first and second layer of paint without the risk of experiencing any issues of interlayer weaknesses. The resulting leading edge protection may in this way be perceived as or observed to appear as a single layer of paint of considerable thickness and reinforced by a fibrous material, thereby obtaining both a thicker layer than otherwise traditionally obtainable combined with the reinforcing effect from the fibrous material.

In an embodiment, the paint is a coating comprising a two-component polyurethane coating such as the Wind Blade Protection Coating W4600 and W4601 from 3M, or the ReNEW W-Series, HC05XP1 by Hontek, which materials have been reported to have superior erosion resistance properties. Additionally or alternatively, the paint is a coating comprising a three component polyurethane coating, an epoxy resin, or a polyester resin or other paint which might or might not be used with additional particles included such as grains, short fibres or nano particles.

In an embodiment, the method further comprises applying alternatingly a further layer of fibrous material and a further layer of paint thereby laying up a plurality of layers of fibrous material with layers of paint in between. Hereby is obtained a leading edge protection of even further increased thickness and thereby of further improved erosion resistance properties and impact strength. Using this method a leading edge protection can be built up to have a desired predetermined minimum thickness. Furthermore, the method simply repeats the application of layers in a number of successive steps and is thereby relatively simple to perform even under difficult working conditions. Embodiments comprise applying 2, 3, 4, or any number up to 6, 7, or 8 layers of fibrous material. The layers of fibrous material may be of the same, partially the same or different materials.

In an embodiment, the layers of paint are applied by rolling, brushing, or spraying. The layers of paint can hereby be applied by simple hand operations yet providing an effective impregnation of the fibrous layer.

In an embodiment, the method further comprises applying a peel ply as the outermost layer prior to curing, peeling off the peel ply after curing, and applying a layer of a paint as an outermost layer. The peel ply may be applied to cover an edge or the full extent of the outermost applied layer of fibrous material and is pressed into the uncured paint. Hereby is obtained a gradual transition between the surface portion comprising the leading edge protection and the neighboring surface regions of the blade, minimizing the aerodynamic impact of the leading edge protection application.

The method steps as described in the preceding may form part of a manufacture of the wind turbine blade or may alternatively or additionally be performed as post processing during repair or maintenance of the wind turbine blade. In other words the leading edge protection can be applied to a wind turbine blade when first manufactured and is also very well suited to be applied at a later time to existing wind turbine blades. A special advantage is, that the preparation method can be performed on blades in the open, on site, or even on blades mounted on the wind turbine as the method may be performed by simple hand operations and simple tools without any requirements such as for example to a special atmosphere (apart from weather conditions matching the operating window for the paint used) or special manufacturing equipment or machinery.

In a non-claimed example, a wind turbine blade may be provided extending a length between a root end and a tip end of the blade, and extending a width between a trailing edge and a leading edge, the wind turbine blade comprising an outer surface portion comprising at least a part of the leading edge, wherein the wind turbine further comprises a leading edge protection prepared as described in the preceding. The advantages of the wind turbine blade are as described in relation to the method of preparing in the previous.

### BRIEF DESCRIPTION OF THE DRAWINGS

In the following different embodiments of the invention will be described with reference to the drawings, wherein:
Fig. 1 shows a wind turbine,
Fig. 2 shows a wind turbine blade comprising a leading edge protection,
Fig. 3 illustrates a part of a wind turbine blade as seen in a cross-sectional view and comprising a leading edge protection, and
Figs. 4A-C illustrate the method of preparing a blade with a leading edge protection according to embodiments of the invention.

### DETAILED DESCRIPTION OF THE DRAWINGS

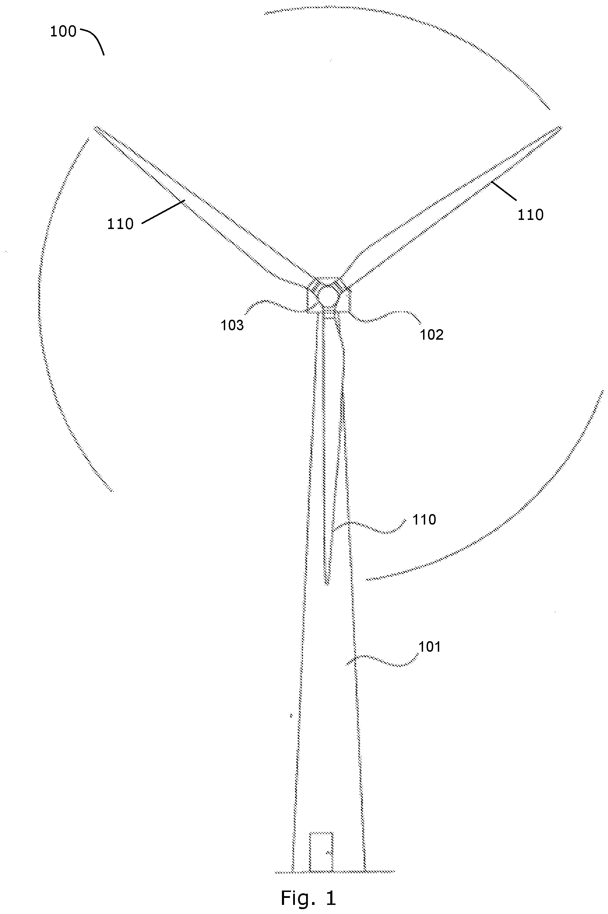

Figure 1 shows a wind turbine 100 comprising a tower 101, a nacelle 102 at the tower top, the nacelle housing machine components, such as gearbox, generator etc. (not shown). At one end of the nacelle, a hub section 103 supports a plurality of wind turbine blades 110.

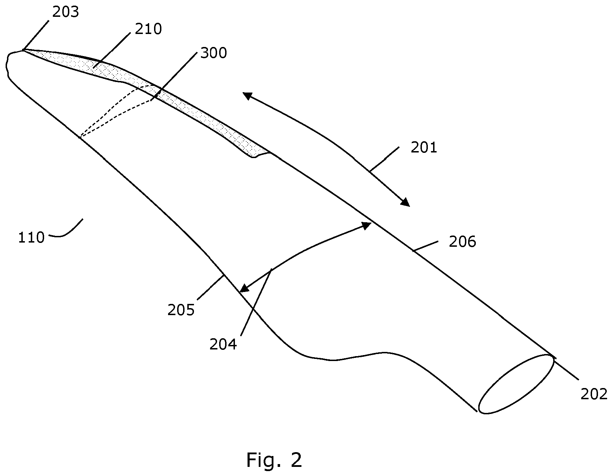

Figure 2 shows a wind turbine blade 110 extending a length 201 between a root end 202 and a tip end 203 of the blade, and extending a width between a trailing edge 205 and a leading edge 206 as indicated by the arrow 204. An outer surface portion 210 of the wind turbine blade covers a part of the leading edge 206 and is provided with a leading edge protection.

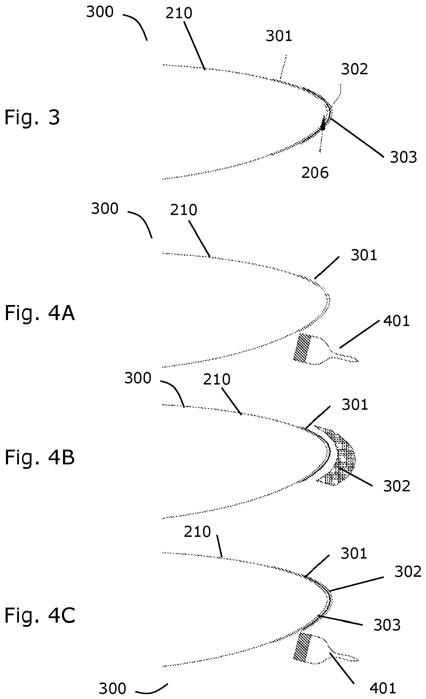

Figure 3 illustrates a part of the wind turbine blade 101 as seen in a cross-sectional view and corresponding to the indicated profile 300 in figure 2. The outer or exterior surface portion 210 of the blade covers and extends across the leading edge 206 of the blade. The leading edge protection comprises a first layer of paint 301 applied to the surface portion 210, a layer of a fibrous material 302, and a further layer of a paint 303 applied on top of and impregnating and wetting out the fibrous material.

The successive steps in the application method are illustrated in figure 4A-C. In a first step illustrated in figure 4A, a first layer of paint 301 is applied to the surface portion 210 and such as to cover the leading edge. The paint may for example be applied by brush, roller or spray 401. Then (figure 4B) the layer of fibrous material 302 is applied on top of the paint 301. The fibrous layer may for example be a weave or mat, or may comprise fibres of for example glass fibre, nylon, Kevlar or polyester or combinations hereof. If desired, the fibrous layer 302 may be applied as multiple patches for example of more easily handled sizes or to better drape on the curved outer surface of the blade. The fibrous layer may be pressed slightly into the paint.

Then in a following step (figure 4C) is applied a second layer of paint 303 impregnating the fibrous layer 302. Again, the paint may for example be applied by brush, roller or spray 401 as convenient. Hereafter the leading edge protection can be left to cure.

A leading edge protection of even further increased thickness may be realized by the application of more layers of fibrous material with layers of paint in between, i.e. repeating the steps of figure 4B and 4C a number of times such as to apply for example 2, 3, 4, 5, or 6 layers of fibrous material. The fibrous material in the different layers may be the same, partially the same or all different.

While preferred embodiments of the invention have been described, it should be understood that the invention is not so limited and modifications may be made without departing from the invention, the scope of which is defined by the appended claims.

## Claims

1. A method of preparing a wind turbine blade (110) with a leading edge protection, the wind turbine blade extending a length between a root end (202) and a tip end (203) of the blade, and extending a width between a trailing edge (205) and a leading edge (206), the wind turbine blade comprising an outer surface portion (210) comprising at least a part of the leading edge, the method comprising:
- applying a first layer of paint (301) on the surface portion of the blade,
- applying a layer of a fibrous material (302) on top of the first layer of paint,
- applying a second layer of paint (303) on the layer of fibrous material, and allowing the applied leading edge protection to cure;
wherein the second layer (303) of paint is applied to at least partially impregnate the layer of fibrous material (302).

2. A method of preparing a wind turbine blade according to claim 1 , wherein the layer of fibrous material (302) comprises a dry fibrous material.

3. A method of preparing a wind turbine blade according to any of the preceding claims, wherein the layer of fibrous material (302) comprises a weave or a random fibre mat.

4. A method of preparing a wind turbine blade according to any of the preceding claims, wherein the fibrous material (302) comprises fibres of at least one material belonging to the group of glass fibre, polyester, Kevlar, and nylon.

5. A method of preparing a wind turbine blade according to any of the preceding claims, wherein the first and second layers of paint (301, 303) are of the same material.

6. A method of preparing a wind turbine blade according to any of the preceding claims, wherein the paint (301, 303) is a coating comprising a two-component polyurethane coating, a three component polyurethane coating, an epoxy resin, or a polyester resin.

7. A method of preparing a wind turbine blade according to any of the preceding claims, the method further comprising applying alternatingly a further layer of fibrous material and a further layer of paint thereby laying up a plurality of layers of fibrous material with layers of paint in between.

8. A method of preparing a wind turbine blade according to any of the preceding claims, wherein the layers of paint (301, 303) are applied by rolling, brushing, or spraying.

9. A method of preparing a wind turbine blade according to any of the preceding claims, the method further comprising applying a peel ply as the outermost layer prior to curing, peeling off the peel ply after curing, and applying a layer of a paint as an outermost layer.

10. A method of preparing a wind turbine blade according to claim 9, wherein the peel ply is applied to cover an edge of the outermost applied layer of fibrous material and is pressed into the uncured paint.

11. A method of preparing a wind turbine blade according to any of claims 1 to 10, wherein the method steps form part of a manufacture of the wind turbine blade (110).

12. A method of preparing a wind turbine blade according to any of the preceding claims, wherein the method steps are performed as post processing during repair or maintenance of the wind turbine blade (110) .

## Patentansprüche

1. Verfahren zum Herstellen eines Windkraftanlagenblatts (110) mit einem Vorderkantenschutz, wobei sich das Windkraftanlagenblatt über eine Länge zwischen einem Wurzelende (202) und einem Spitzenende (203) des Blatts und über eine Breite zwischen einer Hinterkante (205) und einer Vorderkante (206) erstreckt, wobei das Windkraftanlagenblatt einen äußeren Oberflächenabschnitt (210) umfasst, der zumindest einen Teil der Vorderkante umfasst, wobei das Verfahren umfasst:
Aufbringen einer ersten Farbschicht (301) auf den Oberflächenabschnitt des Blatts,
Aufbringen einer Schicht aus einem Fasermaterial (302) oben auf die erste Farbschicht,
Aufbringen einer zweiten Farbschicht (303) auf die Schicht aus Fasermaterial und Aushärtenlassen des aufgebrachten Vorderkantenschutzes;
wobei die zweite Farbschicht (303) aufgebracht wird, um die Schicht aus Fasermaterial (302) zumindest teilweise zu imprägnieren.

2. Verfahren zum Herstellen eines Windkraftanlagenblatts nach Anspruch 1, wobei die Schicht aus Fasermaterial (302) ein trockenes Fasermaterial umfasst.

3. Verfahren zum Herstellen eines Windkraftanlagenblatts nach einem der vorstehenden Ansprüche, wobei die Schicht aus Fasermaterial (302) ein Gewebe oder eine Wirrfasermatte umfasst.

4. Verfahren zum Herstellen eines Windkraftanlagenblatts nach einem der vorstehenden Ansprüche, wobei das Fasermaterial (302) Fasern aus mindestens einem Material aus der Gruppe von Glasfasern, Polyester, Kevlar und Nylon umfasst.

5. Verfahren zum Herstellen eines Windkraftanlagenblatts nach einem der vorstehenden Ansprüche, wobei die erste und die zweite Farbschicht (301, 303) aus demselben Material sind.

6. Verfahren zum Herstellen eines Windkraftanlagenblatts nach einem der vorstehenden Ansprüche, wobei die Farbe (301, 303) eine Beschichtung ist, die eine Zweikomponenten-Polyurethanbeschichtung, eine Dreikomponenten-Polyurethanbeschichtung, ein Epoxidharz oder ein Polyesterharz umfasst.

7. Verfahren zum Herstellen eines Windkraftanlagenblatts nach einem der vorstehenden Ansprüche, wobei das Verfahren weiter das abwechselnde Aufbringen einer weiteren Schicht aus Fasermaterial und einer weiteren Farbschicht umfasst, wodurch eine Vielzahl von Schichten aus Fasermaterial mit dazwischen liegenden Farbschichten aufgeschichtet wird.

8. Verfahren zum Herstellen eines Windkraftanlagenblatts nach einem der vorstehenden Ansprüche, wobei die Farbschichten (301, 303) durch Rollen, Pinseln oder Sprühen aufgebracht werden.

9. Verfahren zum Herstellen eines Windkraftanlagenblatts nach einem der vorstehenden Ansprüche, wobei das Verfahren weiter das Aufbringen einer Abziehschicht als äußerste Schicht vor dem Aushärten, das Abziehen der Abziehschicht nach dem Aushärten und das Aufbringen einer Farbschicht als äußerste Schicht umfasst.

10. Verfahren zum Herstellen eines Windkraftanlagenblatts nach Anspruch 9,
wobei die Abziehschicht so aufgebracht wird,
dass sie eine Kante der äußersten aufgebrachten Schicht des Fasermaterials bedeckt und in die nicht ausgehärtete Farbe hinein gepresst wird.

11. Verfahren zum Herstellen eines Windkraftanlagenblatts nach einem der Ansprüche 1 bis 10, wobei die Verfahrensschritte Teil einer Fertigung es Windkraftanlagenblatts (110) bilden.

12. Verfahren zum Herstellen eines Windkraftanlagenblatts nach einem der vorstehenden Ansprüche, wobei die Verfahrensschritte als Nachbearbeitung während der Reparatur oder Wartung des Windkraftanlagenblatts (110) durchgeführt werden.

## Revendications

1. Procédé de préparation d'une pale d'éolienne (110) avec une protection de bord d'attaque, la pale d'éolienne s'étendant sur une longueur entre une extrémité de pied (202) et une extrémité de pale (203) de la pale, et s'étendant sur une largeur entre un bord de fuite (205) et un bord d'attaque (206), la pale d'éolienne comprenant une partie de surface externe (210) comprenant au moins une partie du bord d'attaque, le procédé comprenant :
une application d'une première couche de peinture (301) sur la partie de surface de la pale,
une application d'une couche d'un matériau fibreux (302) sur le dessus de la première couche de peinture,
une application d'une seconde couche de peinture (303) sur la couche de matériau fibreux, et une permission à la protection de bord d'attaque appliquée de durcir ;
dans lequel la seconde couche (303) de peinture est appliquée pour imprégner au moins partiellement la couche de matériau fibreux (302).

2. Procédé de préparation d'une pale d'éolienne selon la revendication 1, dans lequel la couche de matériau fibreux (302) comprend un matériau fibreux sec.

3. Procédé de préparation d'une pale d'éolienne selon l'une quelconque des revendications précédentes, dans lequel la couche de matériau fibreux (302) comprend un tissage ou un mat de fibres aléatoires.

4. Procédé de préparation d'une pale d'éolienne selon l'une quelconque des revendications précédentes, dans lequel le matériau fibreux (302) comprend des fibres d'au moins un matériau appartenant au groupe des fibres de verre, du polyester, du Kevlar, et du nylon.

5. Procédé de préparation d'une pale d'éolienne selon l'une quelconque des revendications précédentes, dans lequel les première et seconde couches de peinture (301, 303) sont du même matériau.

6. Procédé de préparation d'une pale d'éolienne selon l'une quelconque des revendications précédentes, dans lequel la peinture (301, 303) est un revêtement comprenant un revêtement polyuréthane à deux composants, un revêtement polyuréthane à trois composants, une résine époxy ou une résine polyester.

7. Procédé de préparation d'une pale d'éolienne selon l'une quelconque des revendications précédentes, le procédé comprenant en outre une application en alternance d'une couche supplémentaire de matériau fibreux et d'une couche supplémentaire de peinture en superposant ainsi une pluralité de couches de matériau fibreux avec des couches de peinture intercalées.

8. Procédé de préparation d'une pale d'éolienne selon l'une quelconque des revendications précédentes, dans lequel les couches de peinture (301, 303) sont appliquées par roulage, brossage, ou pulvérisation.

9. Procédé de préparation d'une pale d'éolienne selon l'une quelconque des revendications précédentes, le procédé comprenant en outre une application d'une couche de pelage en tant que couche la plus externe avant durcissement, un pelage de la couche de pelage après durcissement, et une application d'une couche de peinture en tant que couche la plus externe couche.

10. Procédé de préparation d'une pale d'éolienne selon la revendication 9,
dans lequel la couche de pelage est appliquée pour recouvrir un bord de la couche appliquée la plus externe de matériau fibreux et est pressée dans la peinture non durcie.

11. Procédé de préparation d'une pale d'éolienne selon l'une quelconque des revendications 1 à 10, dans lequel les étapes de procédé font partie d'une fabrication de la pale d'éolienne (110).

12. Procédé de préparation d'une pale d'éolienne selon l'une quelconque des revendications précédentes, dans lequel les étapes de procédé sont effectuées en tant que post-traitement pendant une réparation ou une maintenance de la pale d'éolienne (110).
